# EUROPEAN PATENT APPLICATION

(11) **EP 2 527 300 A1**
(43) Date of publication of application: **28.11.2012**
(21) Application number: 11167105.3
(22) Date of filing: 23.05.2011
(51) Int. Cl.: C01G 37/02, C01B 13/34

(54) **Transparent conducting oxide material and methods of producing same**

(71) Applicant: The Provost, Fellows, Foundation Scholars, & the other members of Board, of the College of the Holy & Undiv. Trinity of Queen Elizabeth near Dublin, Dublin 2 (IE)
(72) Inventor: Arca, Elisabetta, Dublin 2 (IE); Fleischer, Karsten, Dublin 7 (IE); Shvets, Igor, Dublin 2 (IE); Gounko, Iouri, Dublin 2 (IE)
(74) Representative: Lucey, Michael

(57) **Abstract**

The invention relates to a new type of material and describes a novel material and way to improve the transparency of a transition metal oxide by employing an anionic doping strategy to modify the transparency. At the same time a cationic dopant is used to improve conductivity.

## Description

### Field of the Invention

The invention relates to a transparent conducting oxide material and to a method to improve transparency and conductivity in p-type transition metal oxides in general.

### Background to the Invention

Transparent conductive oxides (TCOs) such as ZnO:Al (AZO), indium tin oxide (ITO) and SnO₂:F (FTO) are widely used as transparent conductive electrodes, for example as disclosed in A. Facchetti, T. J. Marks "Transparent Electronics, From synthesis to applications", John Wiley & Sons Ltd., West Sussex UK, 2010*.* All these oxides are degenerated semiconductors, with values of conductivity comparable to those of metals. However they are natively n-type conductors, with limited possibilities of reversing the type of carriers from n to p-type. At the same time, it is preferable to have transparent materials of both n-type and p-type electrical conductivity for novel or improved electrical, opto-electronic, photovoltaic and photonic devices.

The first deposition of an intrinsically p-type TCO in a thin film form was reported in 1997, in a paper publication by H. Kawazoe, et al., "P-type electrical conduction in transparent thin films of CuAlO2", Nature, 389, 939-942 (1997) . The capability of producing p-type transparent oxides with both good transparency and high conductivity represents a key point in the development of optoelectronics devices such as optically transparent light emitting diodes (LEDs), large area flat panel displays and solar cells, for example as disclosed in S. Sheng, et al., "p-type transparent conducting oxides", phys. stat. sol. (a), 203, 1891-1900 (2006). Compared to conventional n-type TCOs, the p-type TCOs are generally less conductive, less transparent and show a lower mobility. Often, a much higher deposition temperature is required to achieve p-type materials with optimised properties.

There is a wide range of p-type semiconductors or p-type transparent oxides currently investigated for their use in the devices mentioned above as discussed in A.N. Banerjee and K.K. Chattopadhyay, "Recent developments in the emerging field of crystalline p-type transparent conducting oxide thin films", Prog. Cryst. Growth Ch., 50, 52-105 (2005).. Despite the potential interest in such materials there are technological problems for mass market commercial uses of these p-type oxides at the current time. The main problems with producing these types of materials are:
1) Deposition techniques commonly used are not suited for large scale devices or high throughput production (pulsed laser deposition for example),
2) The energetics of particular p-type TCOs are not suited for the device (band offsets)
3) The performance of an actual p-type oxide is too poor for a particular device (low mobility, low conductivity, too high absorption).

An object of the invention is to provide an oxide material which exhibits high transparency in the visible range of the electromagnetic spectra and p-type conductivity that overcomes at least one of the above mentioned problems.

### Summary of the Invention

According to the invention there is provided, as set out in the appended claims, a oxide of one or more transition metals comprising:
a first doping element, wherein said first doping element is selected from Group IA, IIA, IIIA, IIB or IIIB of the periodic table; and
a second doping element, wherein said second doping element is selected from Group VA of the periodic table.

This invention provides a transparent conducting transition metal oxide material having p-type conductivity, and a method to improve their properties, that have at least three performance characteristics:
i. enhanced transparency in the visible and infra-red parts of the electromagnetic spectrum
ii. enhanced electrical conductance
iii. electric current conducted by means of holes as opposed to electrons.

In one embodiment the metal oxide is a p-type conducting material.

While the concept of using p-type transition metal oxides as transparent contacts is not new in itself, the invention describes a novel way to improve the transparency of a transition metal oxide by employing an anionic doping strategy to modify the transparency. At the same time a cationic dopant is used to improve conductivity. Some metal oxide materials have been used for a long time as p-type oxide, but are not particular transparent and hence have never been used in the context of p-type TCOs. By employing the co-doping strategy of the present invention a material with comparable electric and optical properties as today's best performing alternative p-type TCOs can be created.

In one embodiment the metal is selected from one or more of: Titanium; Vanadium; Chromium; Manganese; Iron; Cobalt; Nickel; Copper; Molybdenum or Tungsten.

The invention covers modifications of the transition metal oxides, primarily oxides of Ti, V, Cr, Mn, Fe, Co, Ni, Cu, Mo, W doped with cation of the group 2 (also known as II A) of the periodic table such as Mg, Ca, Be, Ba, Sr, and anion of the group 15 (also known as VA) of the periodic table such as N, P, As, Sb.

In one embodiment the first, cationic doping element comprises Magnesium.

In one embodiment the second anionic doping element comprises Nitrogen.

In one embodiment the anionic doping alters the lattice structure of the metal oxide to allow for lower absorption.

In one embodiment the anionic doping alters the lattice structure of the metal oxide to allow for improved hole mobility in the material. The carriers are either intrinsic to the host matrix or generated by the cationic doping.

In a further embodiment there is provided a transparent conducting material comprising: chromium oxide, magnesium and nitrogen. One preferred embodiment is Cr₂O₃ co-doped with Mg and N. The invented material will be preferably employed as contact or buffer layer in the form of a film in a solar cell, organic light emitting devices and other optoelectronic devices.

The key point of the invention is the combined inclusion of a doping cation and a doping anion (primarily Magnesium and Nitrogen), where the anionic inclusion alters the optical properties of the host oxide, while the doping cation provides the required carriers. Hence using the combined approach an absorbing or semi-transparent p-type oxide can be transformed into transparent p-type oxides.

The inventors found that one particular p-type oxide (Cr₂O₃), provides a relatively strong absorbent oxide host matrix that is converted into a material with comparable properties than best performing known p-type TCOs, despite a limited crystalline quality of the films due to limitations in the available growth technique.

The invention also provides modification to other transition metal based TCOs such as CuCrO₂ and CuAlO₂ by employing the anionic-cation co-doping mechanism. In both cases it is envisaged that this will lift the limitations of existing p-type TCOs for particular devices and hence make their widespread use possible and addressing the problem of performance of an actual p-type oxide mentioned above. It will be appreciated that the concept of the anion-cation codoping, in particular the nitrogen inclusion, can also affect the energy levels of any other p-type TCO positively and therefore improving their performance in a device.

In another embodiment there is provided a process for making a transparent conductive oxide, said process comprising the steps of:
providing a layer of metal oxide material, for example chromium oxide;
doping the oxide material with a first doping element, wherein said first doping element is selected from Group IA, IIA, IIIA, IIB or IIB of the periodic table; and
doping the oxide material with a second doping element, wherein said second doping element is selected from Group VA of the periodic table.

In one embodiment the doping with the first and second elements is performed simultaneously.

In one embodiment there is provided the synthesis of the metal oxide material using spray pyrolysis. The invention demonstrates deposition of a p-type oxide using an inexpensive, scalable deposition technique. Despite the fact that spray pyrolysis is known to produce relatively poor quality materials, the crucial properties of the films employing the novel doping strategy are comparable to best performing conventional p-type oxides.

It will be appreciated that the properties of Cr₂O₃:(Mg,N) can be improved by employing more sophisticated deposition techniques leading to more homogeneous and better crystallised films - or alternatively employ the concept of cation-nitrogen co-doping or cation-anion co-doping in general to other p-type TCOs and potentially improving their properties in a similar way.

### Brief Description of the Drawings

The invention will be more clearly understood from the following description of an embodiment thereof, given by way of example only, with reference to the accompanying drawings, in which:-
Figure 1 illustrates a schematic unit cell of particular embodiments of the invention. a) An unmodified p-type transition metal oxide host (here Cr₂O₃). The material is modified with said doping strategy with a group IIA cation (here Magnesium) and a group VA anion (here nitrogen). The two dopants are b) either incorporated in separate defect sites, or c) forming a defect complex;
Figure 2 illustrates a UV-visible transmission measurement of undoped chromium oxide and N doped chromium oxide as a function of N content: undoped chromium oxide (---), Cr:N ratio 1:2 (---), 1:3 (----), 1:5 ( ). A glass slide was used as a reference. In the inset the extract extinction coefficient for undoped chromium oxide and for a ratio Cr:N of 1:5 are reported. The Cr:N ratio is given in precursor solution molarities, the actual nitrogen content in the material is significantly lower;
Figure 3 Cross section of one MNCO sample. The thickness of this sample was found to be 125±25 nm;
Figure 4 are examples of AFM images (5x5µm scans).
   a) undoped Cr₂O₃ (rms=40nm), b) Cr:N 1:2 (rms=25nm),
   c) Cr:N 1:3 (rms=50nm),
   d) Cr:N 1:5 (rms=25nm);
Figure 5 shows a XPS measurement of a MNCO sample with Cr:Mg ratio of 9:1 and Cr:N ratio of 1:3; and
Figure 6 shows a comparison between the crystallographic structure of a) the host matrix Cr₂O₃with b) that of the Mg doped system Cr₂O_{3:}Mg and c) the co-doped system Cr₂O₃:(Mg,N).

### Detailed Description of the Drawings

The invention describes a generic concept of enhancing transmission and conductivity in any transition metal p-type oxide by a cation/anion co-doping strategy. Secondly it describes one particular new type of p-type TCO derived from this generic concept: Cr₂O₃:Mg,N (MNCO). The invention demonstrates one particular synthesis route for MNCO via spray pyrolysis, though any other deposition method can be adapted to use the concept of cation-anion codoping.

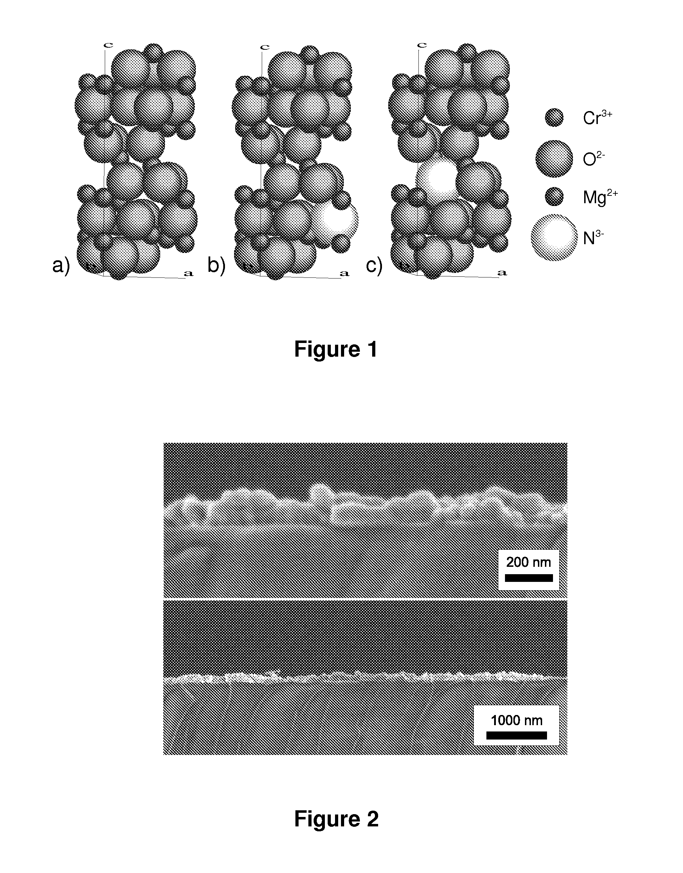

Figure 1 illustrates schematic unit cells of particular embodiments of the invention. a) A p-type transition metal oxide host (here Cr₂O₃) is doped simultaneously with a group IIA cation (here Magnesium) and a group VA anion (here nitrogen). The two dopants are b) either incorporated in separate defect sites, or c) forming a defect complex;

The invention covers a mechanism of combined doping of transition metal oxides with a doping cation of group IA, IIA, IIIA, IIB, or IIIB in combination with anionic doping using elements of group VA, and in particular nitrogen. Transition metal oxides are often intrinsically p-type oxides. The most commonly known p-type TCOs are all from that material class. For many of these oxides where intrinsic p-type behaviour is found, the cations include Cr, Fe, Cu, V, Mo, W and other group VIA, VIIA, VIIIA, VIIIA, VIIIA, IB elements. In some cases the cation d-level states are modified by the crystal field, mostly due to the octahedral coordination with oxygen in the crystal structure. This leads to the presence of mid-gap states, which explain the typically poor transmission. This is a particular problem if a transparent material is needed as is required for a p-type transparent conductor. By altering the crystal field in the vicinity of the cation either in strength or by changing the symmetry, the energetic levels of the d-state electrons can be altered, leading to an improvement in transmission. This requires changes in the anionic lattice. By employing substantial anionic doping such alterations of the crystal lattice are possible. If combined with traditional cation doping it is possible to convert even a poor conducting, absorbing transition metal oxide such as Cr₂O₃ into a material showing the required properties of a p-type TCO.

In the present invention samples were deposited by spray pyrolysis. However the main embodiment of the present invention consist in the above mentioned materials and modifications of thereof, regardless the technique used to deposit it. It has to be appreciated, in fact, that this material is not technique-dependent and it can be obtained by other technique such as magnetron sputtering, chemical vapour deposition (CVD) and related techniques, atomic layer deposition (ALD), or pulsed laser deposition (PLD). Therefore the use of spray pyrolysis as technique has to be intended only as an example and not to limit the scope of the present invention. Details of the actual technique and of the equipment used for the characterization of the film will be only briefly outlined in the examples below. Different techniques will be employed in order to characterize the materials. All of them are beyond the scope of the present invention and they have been used in order to describe preferred embodiments of the present invention. Those with skills in the art will appreciate that all the values extracted via the different techniques are just indicative and subject to the experimental error always associated with the measurements. For this reason they have to be intended as a complementary part and not as a limit of the present invention.

All samples were thoroughly characterised, to avoid unintentional systematic changes between unmodified and modified forms of the material.

In Figure 2 the enhanced specular transmission of visible light as a function of nitrogen content is demonstrated. Additional measurements ruled out other causes for increased transparency than the reduced absorption as described in this invention. The optical properties were determined by Fourier transformed near infrared spectroscopy (FT-NIR) and UV-Visible spectrophotometry by using respectively a Perkin Elmer Spectrum One NTS FTNIR and a Cary 50 spectrophotometer equipped with a Xenon lamp. The oxide doped with nitrogen show an improvement in the visible range of the electromagnetic spectra with respect to the undoped system (herein called host matrix). The improvement of the optical properties can include but not be limited to a band gap opening of at least 0.2 eV upon doping. The ratio between nitrogen and oxygen should be in the range between 0 and 50%, preferably 10 to 15%. It is likely that adding the nitrogen into the matrix a higher crystal field is created and a higher energy separation of the hybridized d-levels of the transition metal is produced. As a consequence optical transitions in the visible range are reduced and transparency increased, as shown in Figure 2. The thickness for samples shown in Figure 2 was 150±30 nm.

Other mechanisms by which the said anions could increase the optical transparency of the said oxides are also possible and the invention is not limited to one particular physical mechanism.

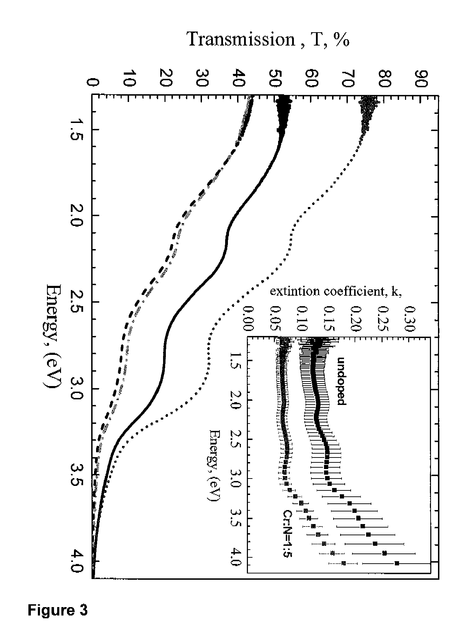

Thickness measurements were performed by cross sectional scanning electron microscope (SEM) by using a Zeiss Ultra Plus scanning electron microscope. For this purpose samples were cut and the resulting cross-sectional images were analysed. An example of these measurements is given in Figure 3. The thickness of this particular sample was found to be 125±25 nm. Similar measurements for other samples confirm that the observed enhancement in transmission by employing the nitrogen doping is not related to different sample thickness.

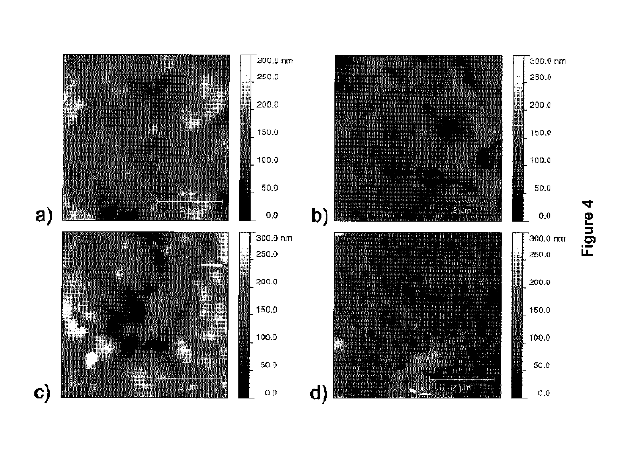

Morphological properties were analysed by atomic force microscope by using an Asylum (MFP-3D^{TM} Stand Alone AFM) apparatus and using a single crystal silicon tip in non-contact mode. Extracted roughness values from these scans have been used to exclude the possibility of scattering being responsible for the measured changes in transparency, as shown in Figure 4. In Figure 4 Rms roughness values are comparable among different samples and they do not scale with the transmission measurements.

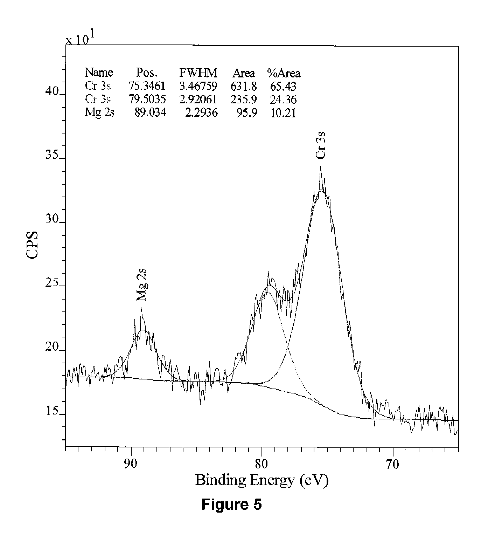

For compositional analysis energy dispersive x-ray spectroscopy (EDX) and x-ray photoelectron spectroscopy (XPS) have been used. EDX was performed with an Oxford Instruments INCA system attached to a Zeiss Ultra Plus SEM. XPS analysis was performed by using an Omicron MultiprobeXP system (Mg X-ray source, E125 Analyser). Experimental data were analysed using the CasaXPS software. Both techniques have been employed to confirm incorporation of Mg and N into the host matrix as outlined in this invention, as shown in Figure 5. The inclusion of nitrogen may affect the structural properties of the film, however preferably this effect can be limited to an expansion or contraction of the cell parameters and should not lead to any phase separation, i.e. the film should preferably remain in single crystalline phase state.

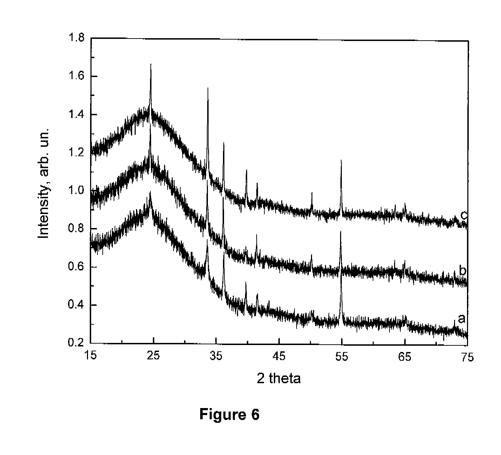

The crystallographic analysis was been done by means of X-ray diffraction (XRD) in conjunction with a numerical analysis of the experimental data by using the software MAUD. For this purpose a Bruker D8 Discovery diffractometer with monochromised Cu Kα source was used. Results confirmed that the original host material does not undergo major structural changes while employing the co-doping strategy, as shown in Figure 6. In Figure 6 all films are single phase, corresponding to the PDF pattern Nr. 01-072-3533. Difference in the lattice parameters are within the experimental error of ±0.005 Å. The broad background at 25° arises from the glass substrate.

Electrical properties were determined by Hall measurements using the standard Van der Pauw configuration or linear 4PP configuration. If necessary, the temperature dependency of such properties was studied in a range of 50 to 150°C.

### Example Embodiment of Cr₂O₃ doped with nitrogen and magnesium

Upon doping with nitrogen, the specular optical transparency of the Cr₂O₃ matrix improves from an average of 30% up to an average value of 65% at wavelength comprising from 600 to 1000 nm, as shown in Figure 2, for the film thickness of 150±30 nm. Such a difference cannot be attributed to change in the film thickness or its roughness. To discard the first hypothesis, samples with comparable thickness are produced. It was confirmed that the difference in transparency is not due to the change in thickness by measuring and controlling the film thickness. Thickness was determined by cross-sectional SEM, an example of which is given in Figure 3. To discard the second hypothesis, rms roughness were measured by atomic force microscopy. No systematic correlation between the transmission data and the rms values was found, excluding changes in scattered light as origin of the increase in specular transmission. (examples of AFM used for the statistical analysis are given in Figure 4).

The improved transmission in itself is helpful for certain p-type oxides. In the particular case of Cr₂O₃:N it is accompanied with an unwanted reduction in conductivity which can be balanced by the cationic co-doping.

Cr₂O₃:N are co-doped with at least one cation from Group 1, 2, 12, 13. The experimental data indicates that enhancement in the transmission of the oxide films is produced regardless the cations introduced as co-dopants. The best results are currently achieved with Cr₂O₃:(M,N) where N is nitrogen and M is any of the elements of group 1, 2 , 12 ,13 , preferably M is Mg and Zn.

The amount of cationic doping can be modified over a wide range, enabling tuning of electrical properties of the TCO. To determine the actual amount of Mg incorporated, XPS measurements were performed the results of which are shown in Figure 5.

Figure 5 shows a XPS measurement of a MNCO sample with Cr:Mg ratio of 9:1 and Cr:N ratio of 1:3. The Mg 2s and Cr 3s core levels are measured and a Mg atomic content of 10±2% was confirmed, demonstrating magnesium incorporation into the sample in accordance with the nominal precursor concentration.

According to the invention, the material Cr₂O₃:(Mg,N) has a Cr:Mg content ranging from 1:0 to 7:3. With the currently used precursors, an optimum Cr:Mg ratio was identified to be 9:1 and has been confirmed by X-ray photoelectron spectroscopy (XPS) as shown in Figure 5. At this doping level for the system Cr₂O₃:Mg, a minimum in the resistivity of 15 Ωcm is reached and this could be even further reduced to a value of 5 Ωcm after co-doping with nitrogen (material Cr₂O₃:(Mg,N)). It is worth noting that the introduction of only nitrogen in the host matrix does not produce any improvement in the electrical properties. On the contrary resistivity values rise sensibly. Therefore the improved conductivity for the Mg, N co-doped system is due to the formation of a Mg-N defect complex, characterized by a lower carrier activation energy or an improved hole mobility by the distortions of the anionic sublattice. Other mechanisms can also explain the enhanced conductivity and the invention is not limited to one particular physical mechanism

The crystallographic phase of the oxide modified with the procedure outlined in this invention, remains unchanged after doping. The co-doping by the cation and anion leads to a small change in the cell parameter, while the system still remains a single phase with the basic crystallographic parameters such space group, unchanged. However an unchanged lattice is not required for the invention. With other doping elements a lattice expansion of contraction could occur. The absence of lattice distortion in the case of Cr₂O₃:(Mg,N) is caused by moderate difference in ionic radii of Mg and Cr and O and N respectively. It is therefore likely that even a larger amount of Mg and N incorporation is not changing the overall lattice geometry significantly.

As mentioned previously the invention is not limited to the material of Cr₂O₃:(Mg,N). Other host materials or dopants can equally be used. Depending on the mechanisms of the absorption of the host material, formation energy of the defect levels of the intentional dopant as well as carrier activation energies and precursor decomposition rates the improvement in the p-type TCO by employing our method will vary though. To demonstrate this results on another cation dopant for the Cr₂O₃ host material are shown - here Zinc. Cr₂O₃:(Zn,N) has a Cr:Zn content ranging from 1:0 to 7:3. For this system a minimum resistivity of 18 Ωcm has been achieved for Zn, N codoping with similar improvements in transparency as for the previously Cr₂O₃:(Mg,N). Again a significant improvement in comparison with the same oxide material doped with Zn alone (resistivity of 100 Ωcm).

One of the benefits of the present invention is the stability of the discovered materials with respect to accelerated ageing tests. All materials cited so far are stable with respect to annealing performed at least at 400°C at least up to 2 hrs. This annealing was done under different gas environments (under nitrogen or oxygen or air flow and under vacuum condition), all showing no degradation of the material.

A further aspect of the invention is related to the improvement of the electrical properties of the discovered materials observed after post-annealing treatment carried out at temperature between 500 and 600°C in oxygen atmosphere. Effect of this treatment was found to be sensitive to the gaseous environment during annealing. For example, a degradation of the electrical properties was observed as a consequence of post growth annealing treatment carried out at 500°C under air or nitrogen flow, while the stability region expands to 650°C if a flux of oxygen is used.

### Example Devices Incorporatina Material of the Present Invention:

It will be appreciated that the p-type transparent oxides hereinbefore described can be used in optoelectronic devices. In particular certain type of photovoltaic solar cells require p-type transparent electrodes, namely CulnS₂ and Cu(ln,Ga)Se₂ based cells, as well as certain organic photovoltaic cells and dye sensitised solar cells. Other optoelectronic devices, where p-type TCOs are of interest are organic light emitting devices (OLED_{S}) and transparent thin film transistors (TFTs). In the following applications of the material of the present invention are described in exemplary form:

### Hole injection layer in OLED devices

For any light emitting device the carrier injection into the active area is a critical concern. For surface emitting devices (such as OLED screens) either the cathode or the anode needs to be transparent. There are several types of OLED's where the anode is transparent. Currently most of them employ ITO layers in conjunction with thin p-type transparent materials as so called hole injection layers. The function of these is to lower the barrier for hole transfer from ITO (n-type TCO) to the active organic. Examples for such hole injection layers are LiF or organic conductors such as PEDOT:PSS. A p-type oxide with correct band alignment and appropriate work function can be used as a similar layer.

Employing the co-doping strategy any p-type transition metal oxide can be used as hole injecting layer since transparency can be achieved by the nitrogen inclusion, while electrical parameters can be controlled via the cation doping. This opens the use of a wider range of materials than currently available.

### Alternative p-type buffer laver in CIGS or CIS2 thin film solar cells

Almost all CIGS and CIS2 thin film solar cells employ CdS buffer layers at the front contact to maximise current injection from the transparent ZnO:Al front contact to the typically p-type chalcogenide absorber. There is intensified interest to replace CdS for ecological reasons. However, currently the only alternative in limited use is Cul. This alternative p-type semiconductor has limited transparency, thus it is only used in very thin films. Any p-type TCO could potentially replace CdS or Cul, providing band alignment and work function are matching the ZnO:Al / CIGS(CIS2) levels. Employing the co-doping strategy of the present invention any p-type transition metal oxide can be used as buffer layer since transparency can be achieved by the nitrogen inclusion, while electrical parameters can be controlled via the cation doping. This opens the use of a wider range of materials than currently available.

There is one particular type of CIGS cells, so called bifacial cells, where both contacts have to be transparent. In these cells the typical Mo back contact is replaced by a conventional n-type TCO/MoSe₂ contact. The MoSe₂ acts as hole injection layer and could be replaced by a modified p-type TCO as well.

### Novel transparent thin film transistors

The most important application for transparent electronics are TFTs employed in any LCD monitor or screen. The TFT's currently always consist of amorphous silicon, which due to its relatively poor absorption is still semitransparent in the visible range, a-Si has a band gap of 1.5 eV, hence absorbs in the whole visible spectral range. However it is an indirect semiconductor and the absorption coefficient maximises around 3eV. Limitations arise for displays with brilliant colours as the blue and green spectral range is more absorbed and emission is more difficult. Hence a replacement for a-Si by fully transparent homo or hetero junctions is desirable. Current p-type TCOs are potential replacement candidates, however their characteristic low mobility limits applications. In order to compete with the average pixel switching frequency of a-Si TFT, channel mobilities better than 1 cm² V⁻¹ s⁻¹ are required. By employing the co-doping strategy described here a wider range of p-type oxides can be employed, the mobility improved, or those oxides with higher mobilities can be made transparent.

### Dye sensitised solar cells (DSSC)

One class of organic solar cells are so called dye sensitised solar cells (DSSCs). The problem is the relatively low efficiencies of 3-5%. There are many combinations of dye material and electrolyte - some of them require a p-type transparent contact, which can be made out of the novel Cr₂O₃:(Mg,N). Alternatively the concept of cation-nitrogen co-doping to improve the transparency can be applied to existing p-type TCOs used in such cells. The modified p-type oxide can be employed (but not exclusively) as hole injection layer, p-type buffer layer in multiple junction cells, or p-type layer in n-type semiconductor/dye/p-type semiconductor (NDP) devices.

### Examples of synthesis of modified transition metal oxides

The following examples are given to illustrate some of embodiments within the scope of the present invention. It has to be understood that the following examples are neither comprehensive nor exhaustive of the many possible embodiments of the present invention. It has also to be understood that their inclusion has exemplification purposes and are not meant to limit the content of the present patent.

### Example 1

*Deposition of Cr₂O₃ by spray pyrolysis and co-doping with Mg and N.*

Cr₂O₃ was deposited by spray pyrolysis. The apparatus used consist of a peristaltic pump, an air-blast nozzle and a ceramic heater. The depositions have been carried out in a confined environment as the nozzle and the ceramic heater were placed inside a stainless steel chamber. In this particular example, chromium nitrate was used as Cr precursor and water as solvent. Magnesium chloride and ammonium acetate were added in different ratios with respect to the Cr content. The ratios of magnesium chloride and ammonium acetate are tuned to obtain the desired extent of incorporation of Mg and N in the oxide material. Chromium concentration was kept fixed to a value of 0.1 M. pH was adjusted to be zero. The solution was pumped up to a nozzle at a rate of 1.8 ml/. In the nozzle the liquid is nebulized by means of a gas, either air or oxygen or a mixture of them, which also carries this fume towards the substrate. Best results were obtained by using oxygen for nebulising the solution.

In this example glass substrates are used . The best results were obtained at the substrate temperature of 530°C as input for the ceramic heater, corresponding to the real surface temperature of about 430°C. As it will be appreciated by those skilled in the art of spray pyrolysis the difference between the two temperatures is due to the cooling of the materials by mixture of nebulising gas and the spray solution. Under these conditions an oxide layer can be deposited, which has an average transmission of 60% in the energy region spanning from 600 to 1500 nm when the layer thickness is about 200 nm. In this case an average resistivity of 5 Ωcm can be achieved, with minimum values of 3 Ωcm for optimum conditions. Samples are semiconducting, characterized by activation energy of 185 meV. Typical Hall mobility values were around 0.1 cm²V⁻¹ₛ⁻¹ and carrier concentration was of the order of 10¹⁹ _{cm}-_{3.}

### Example 2

*Deposition of Cr₂O₃ by spray pyrolysis and co-doping with Zn and N.*

The same precursors and chromium concentration were adopted in this case as in the Example 1. Best substrate temperature during the deposition was 530 °C as input for the heater and oxygen as nebulizer and carrier gas. Films with the best electrical and optical properties were obtained when a ratio of Zn:Cr was set to 20%. In this case a resistivity of 18 Ωcm and a transparency of 60% were obtained. The resistivity values for the Zn-N co-doped material is better than those of the Cr₂O₃:Zn material (resistivity of 10² Ωcm).

### Example 3

*Thermal treatment of the Cr₂O₃(Mg,N) co-doped system.*

Samples were prepared according to the procedure described above (Example 1). Before the thermal treatment, samples were ultrasonically cleaned in order to remove contamination. Optical, electrical and structural properties were checked prior to the thermal treatment and following the treatment. Samples were annealed in an open end furnace under a flux of oxygen, air or nitrogen. All the gases were industrial grade or higher in purity.

Electrical and optical properties could be retained after a thermal treatment of 2 hrs under nitrogen, air, oxygen environment or under vacuum. The stability region expands to 650 °C if a slight excess of nitrogen was used. As a result of the annealing treatment at 550 °C for 2 hours, resistivity values improves by a factor of 2 while optical properties remain unchanged

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. An oxide of one or more transition metals comprising:
a first doping element, wherein said first doping element is selected from Group IA, IIA, IIIA, IIB or IIIB of the periodic table; and
a second doping element, wherein said second doping element is selected from Group VA of the periodic table.

2. The metal oxide of claim 1 wherein the metal comprises Chromium, the first doping element comprises Magnesium and the second doping element comprises Nitrogen.

3. The metal oxide of claim 1 wherein one or more transition metals are selected from one of: Titanium; Vanadium; Chromium; Manganese; Iron; Cobalt; Nickel; Copper; Molybdenum or Tungsten.

4. The metal oxide of any preceding claim wherein the first doping element comprises at least one of Magnesium, Zinc, Lithium or Calcium.

5. The metal oxide of any preceding claim wherein the second doping element comprises Nitrogen.

6. The metal oxide of any preceding claim wherein the anionic (group VA) doping alters the lattice structure leading to a reduced optical absorption in the material.

7. The metal oxide of any preceding claim wherein the anionic (group VA) doping alters the lattice structure leading to an improved electron mobility in the material.

8. A transparent p-type material comprising oxide of one or more of Titanium; Vanadium; Chromium; Manganese; Iron; Cobalt; Nickel; Copper;
Molybdenum or Tungsten; and further comprising Magnesium and Nitrogen.

9. A transparent p-type conducting oxide of any preceding claim in a corundum crystal structure, preferably a rhombohedral corundum structure.

10. A transparent p-type conducting Cr₂O₃ in rhombohedral corundum structure, doped with magnesium and nitrogen.

11. A film of material as in any of the preceding claims formed on a substrate with the thickness in the range from 5nm to 10µm.

12. An electronic device comprising the material of any one of claims 1 to 10.

13. A photovoltaic or dye-sensitised solar cell structure comprising the material of any one of claims 1 to 10.

14. A thin film transistor comprising the material of any one of claims 1 to 10.

15. A method for producing the oxide material of any preceding claim comprising the step of annealing the material at a temperature from 200 to 700°C.
